# DEMANDE DE BREVET EUROPEEN

(11) **EP 1 026 527 A1**
(43) Date de publication de la demande: **09.08.2000**
(21) Numéro de dépôt: 00400151.7
(22) Date de dépôt: 20.01.2000
(51) Int. Cl.: G02B 6/38

(54) **Système de connecteurs optiques à nettoyage aisé**

(30) Priorité: 03.02.1999 FR 9901253
(71) Demandeur: FRAMATOME CONNECTORS INTERNATIONAL, 92400 Courbevoie (FR)
(72) Inventeur: Lecomte, Fabrice M., 72220 Saint Mars d'Outiller (FR)
(74) Mandataire: Schmit, Christian Norbert Marie

(57) **Abrégé**

Pour simplifier des opérations de nettoyage d'un connecteur (1, 4) optique, notamment de la partie (4) femelle de ce dernier, on prévoit que lors de la déconnexion, des férules (5) encastrées dans les cavités (9) femelles du connecteur complémentaire seraient portées en affleurement (7) du connecteur complémentaire par coulissement d'un manchon (6) qui le constitue. On montre qu'en agissant ainsi on peut effectuer des entretiens de nettoyage plus fréquents et plus simples des connecteurs optiques. Le connecteur est perfectionné par une pince (37) qui accueille un poussoir en fin de poussée.

## Description

La présente invention a pour objet un système de connecteurs optiques c'est-à-dire un système de connecteurs utilisé pour relier entre eux des tronçons de fibre optique. Le but de l'invention est de permettre un entretien notamment un nettoyage facile de ce type de connecteur.

Les systèmes de connecteurs de fibre optique comportent dans leur principe un engagement d'un connecteur, par exemple une prise mâle, dans un connecteur complémentaire, par exemple une fiche femelle. Un tel engagement réalise une fonction de guidage en même temps qu'une fonction de connexion de terminaisons optiques du connecteur avec des terminaisons optiques du connecteur complémentaire. Des férules protubérantes sont disposées à cet effet dans le connecteur. Dans le connecteur complémentaire, femelle dans un exemple, des férules encastrées sont disposées en correspondance. Les férules sont des dispositifs de maintien et de présentation d'une extrémité d'un tronçon de fibre optique. Les férules assurent essentiellement une fonction mécanique de préhension d'une extrémité, fragile, de fibre optique. Pour obtenir un bon alignement d'une férule par rapport à l'autre, un enfouissement profond des férules dans le connecteur complémentaire est recherché. Ce bon alignement est obtenu grâce à un manchon d'alignement qui se trouve à la circonférence de la férule du connecteur complémentaire et, au milieu duquel se fait la connexion des deux férules optiques. Malgré toutes les précautions prises, il apparaît qu'au bout d'un certain temps d'utilisation un tel connecteur optique est le siège de pertes de transmission, par salissure des extrémités des fibres maintenues en bout de ces férules. Il est donc nécessaire de les nettoyer. Le nettoyage est alors d'autant plus délicat que la profondeur du contact est importante.

Pour résoudre ce problème, la demande de brevet européen EP-A-0 762 167 préconise de réaliser le connecteur complémentaire avec une rehausse. La rehausse constitue la forme femelle du connecteur. Quand elle est enlevée, le connecteur complémentaire laisse apparaître en affleurement les extrémités des fibres optiques pour leur nettoyage aisé. Cette solution présente cependant deux inconvénients. Premièrement, il faut enlever la rehausse intermédiaire (puis après nettoyage la remonter). Ceci constitue en soi une opération supplémentaire, et donc une perte de temps, et nécessite compte tenu de la miniaturisation des connecteurs, un outillage spécial qu'il faut avoir à disposition. D'autre part l'enlèvement de cette rehausse intermédiaire peut donner lieu à son égarement. Deuxièmement, celle rehausse doit, lors de son enlèvement, être posée en un endroit qui peut ne pas être propre, de sorte que lorsqu'elle est reposée sur le connecteur complémentaire femelle le nettoyage résultant n'est pas partait.

Le but de l'invention est de remédier à ce problème en proposant un système de connecteurs dans lequel les différentes pièces du connecteur complémentaire ne sont pas séparables et dans lequel, du seul fait qu'on déconnecte le connecteur du connecteur complémentaire, on puisse accéder aux extrémités des férules de ce connecteur complémentaire.

Le principe de l'invention consiste à réaliser un connecteur complémentaire susceptible de posséder deux états. Dans un premier état, déconnecté, les férules du connecteur complémentaire apparaissent en affleurement de ce connecteur complémentaire. Elles sont alors facilement accessibles pour leur nettoyage. On montrera en outre qu'en agissant ainsi les organes internes du connecteur complémentaire ne peuvent recevoir de salissures qui viendraient contrarier les efforts de nettoyage. Dans un deuxième état, connecté, le connecteur complémentaire adopte une forme femelle classique correspondant à un mode de protection contre les agents extérieurs par encastrement du connecteur dans ce connecteur complémentaire.

Un tel dispositif nécessite toutefois la présence de ressorts pour provoquer d'une manière automatique une telle séquence d'engagements puis de mise en contact des terminaisons des fibres optiques. En pratique les forces de rappel des différents ressorts doivent être différenciées. Ce qui amène les ressorts les plus résistants à être plus volumineux. Or, dans le domaine des connecteurs miniaturisés, dans certains cas, l'encombrement de ces ressorts est rédhibitoire. Dans l'invention, on résout alors ce problème d'encombrement en supprimant un de ces ressorts. On remplace dans ce cas une pièce de poussée par une pince. Cette pince reste fermée lorsqu'elle est soumise à un effort faible d'un poussoir sur sa tête. Lorsque l'effort devient plus fort la pince s'ouvre et enveloppe l'extrémité du poussoir autorisant la suite de la progression de ce poussoir. En fait, la pince ne peut s'ouvrir qu'une fois que le poussoir a parcouru une certaine course et que des mâchoires de la pince sont situées dans un alésage permettant son écartement. Avec une telle solution, la dimension du connecteur peut être significativement réduite, et il peut être gagné jusqu'à deux tailles de connecteur par rapport à une solution avec ressort.

L'invention a donc pour objet un système de connecteurs optiques comportant d'une part un connecteur portant un premier jeu de férules et d'autre part un connecteur complémentaire portant en correspondance un deuxième jeu de férules dépassant d'un manchon coulissant capable d'occuper deux positions, une position de déconnexion dans laquelle le manchon est en retrait sur le connecteur complémentaire et laisse apparaître des extrémités des deuxièmes férules, et une position de connexion dans laquelle le manchon est avancé sur le connecteur complémentaire et forme le réceptacle femelle du connecteur, caractérisé en ce que le connecteur comporte un poussoir fixe et en ce que le connecteur complémentaire comporte un équipage mobile qui emporte le deuxième jeu de férules et qui est muni d'une pince de manoeuvre en butée sur le poussoir lors du passage de la position de déconnexion à la position de connexion et qui enveloppe une extrémité de ce poussoir dans la position de connexion.

L'invention sera mieux comprise à la lecture de la description qui suit et à l'examen des figures qui l'accompagnent. Celles-ci ne sont présentées qu'à titre indicatif et nullement limitatif de l'invention. Les figures montrent:
- Figure 1 : une représentation schématique très simplifiée du système de connecteurs optiques de l'invention et de son mode de fonctionnement;
- Figures 2a à 2c : des représentations détaillées d'un mode préféré de réalisation du système de connecteurs optiques de l'invention et de l'évolution de ses différentes pièces au cours de la connexion;
- Figures 3a à 3c : des représentations en coupe du connecteur des figures 2a à 2c.

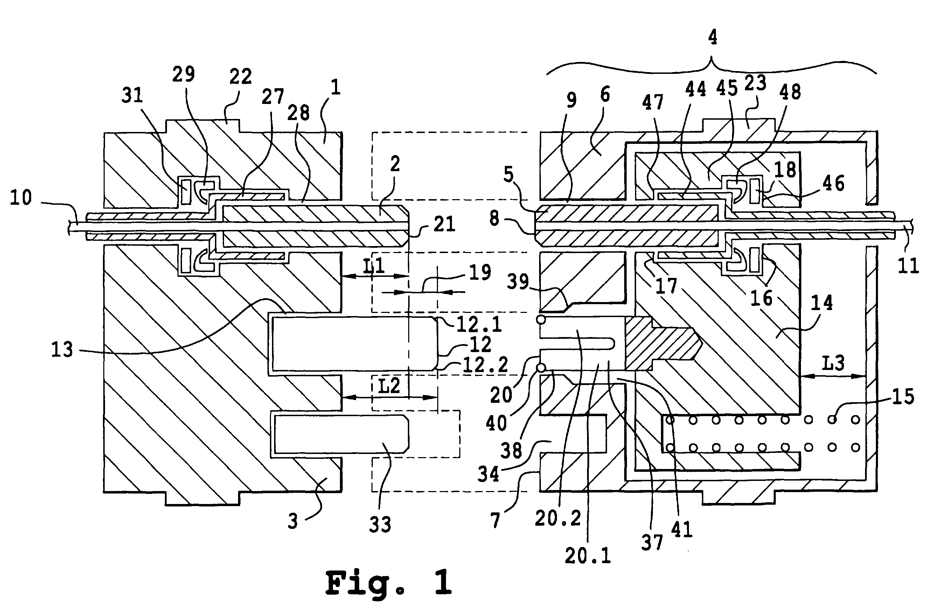

La figure 1 montre d'une manière schématique simplifiée un système de connecteurs optiques selon l'invention. Celui-ci comporte d'une part un connecteur 1, ici mâle. Ce connecteur 1 comporte un premier jeu de férules 2. On n'a représenté qu'une seule férule 2 parce que le connecteur pourrait n'en comporter qu'une. Néanmoins dans la pratique il en comportera plusieurs comme on le verra par la suite. Le connecteur est dit mâle parce que la férule 2 est protubérante par rapport à une face 3 de ce connecteur. Le système de connecteurs optiques de l'invention comporte d'autre part un connecteur complémentaire, ici une fiche femelle 4. Le connecteur complémentaire 4 porte, en correspondance des férules 2, un deuxième jeu de férules 5. Là également on n'a montré qu'une seule férule 5 pour simplifier le dessin. Selon une caractéristique essentielle de l'invention, le connecteur complémentaire femelle comporte un corps 6 formant manchon et capable d'occuper deux positions. Le corps 6 est représenté par des hachures. Il peut occuper deux positions par rapport aux férules 5. Dans une position de déconnexion, montrée sur la figure 1, le manchon est en retrait et laisse apparaître à sa surface 7, en affleurement, les extrémités 8 des férules 5 du deuxième jeu de férules. Dans celle position les extrémités 8 peuvent être facilement nettoyées, par exemple à l'aide d'un papier sec. Dans une autre position montrée en tirets, une position de connexion, le manchon 6 est avancé sur le connecteur complémentaire, les férules 5 sont en retrait et des espaces 9 qu'elles occupaient dans la première position forment des réceptacles femelles des férules du connecteur complémentaire 4. Les férules 2 et 5 sont par ailleurs reliées à des fibres optiques 10 et 11 respectivement.

Pour aboutir à ce résultat on aurait pu simplement maintenir les férules 5 par un ressort dans une position avancée par rapport au manchon 6. Cette solution aurait néanmoins conduit à provoquer la répulsion des férules 5 par action sur elles des férules 2 lors de la connexion. Celle solution qui peut fonctionner sous réserve d'avoir des extrémités de férules 5 et 2 d'une part solides et d'autre part non abrasives n'est pas préférée car elle serait moins bien adaptée à des opérations de connexion déconnexion fréquentes. D'autre part, le montage serait beaucoup moins précis et automatique. Il faudrait alors un autre moyen pour mettre les extrémités des férules en correspondance.

Pour remédier à cet autre problème, l'invention prévoit à titre de perfectionnement de réaliser le système de connecteurs d'une manière plus complexe. Dans ce perfectionnement, le connecteur 1 comporte un poussoir massif protubérant 12. Le poussoir 12 est maintenu en protubérance par rapport à la surface 3 par un enfoncement de sa partie arrière dans un alésage 13 du connecteur 1. Le connecteur complémentaire 4 comporte, en correspondance de ce poussoir 12, un équipage mobile 14. Léquipage mobile 14 est maintenu dans le corps 6 du connecteur complémentaire 4, en direction de la face 7, par un ressort 15. Par ailleurs l'équipage mobile 14 comporte deux appuis 16 et 17. Ces deux appuis servent à maintenir la férule 5 repoussée, entre eux, par une rondelle élastique en élastomère 18.

Le fonctionnement de ce mécanisme est le suivant. D'une part le poussoir 12 présente une protubérance plus accentuée 19 que les protubérances des férules 2 du connecteur 1 par rapport à la face 3. En correspondance l'équipage mobile 14, dans la position déconnectée, est lui également affleurant à la surface 7 du connecteur complémentaire 4 par une tête 20. Ce faisant, ce qui est important est qu'au début de la connexion, l'extrémité du poussoir 12 vienne seule au contact de la tête 20 de l'équipage mobile 14. La connexion est réalisée par approche du manchon 6 en direction du connecteur 1. Léquipage mobile 14 est alors repoussé dans le manchon 6 de ce seul fait, et comprime le ressort 15. Le retrait de l'équipage mobile dans le corps 6 provoque, par l'action de l'appui 17, un retrait identique de la férule 5 et de la rondelle élastique 18. Dans ces conditions, les férules 2 peuvent s'engager dans les cavités 9 qui se libèrent peu à peu. Au cours de cet avancement la distance 19 qui sépare les extrémités des férules est égale à la différence L2― L1, L1 étant la protubérance des férules 2 et L2 la protubérance du poussoir 12.

A un moment donné, l'équipage mobile 14 ne peut plus reculer. Pour l'instant on admettra que le ressort 15 est en limite de compression, ou qu'une distance L3 qui sépare l'arrière de l'équipage mobile 14 du fond du manchon 6 est inférieure à la longueur L2 de protubérance du poussoir 12. Par la suite on montrera comment, compte tenu des précisions de mouvement nécessaires, ce blocage en butée de l'équipage mobile 14 est précisément obtenu. Si après ce blocage, on continue l'opération de connexion, en continuant à approcher notamment le manchon 6 du connecteur 1, l'extrémité du poussoir, qui a une forme tronconique ou au moins chanfreinée avec des chanfreins 12.1 et 12.2, pénètre dans la tête 20. Dans ce but la tête 20 est formée par les extrémités de mâchoires 20.1 et 20.2 d'une pince 37. Plus précisément, la pince 37 est de préférence réalisée à partir d'un cylindre creux et fendu, en partie, à partir de la tête 20. En pratique quatre fentes permettent de réaliser quatre lames dressées vers la tête 20, courbes, contiguës, telles que 20.1 et 20.2, qui épousent la forme d'un alésage 38 cylindrique circulaire dans lequel coulisse la pince 37 sous la poussée du poussoir 12. Ces lames courbes 20.1 et 20.2 sont de préférence en plus recourbées vers l'intérieur du cylindre à leur extrémité formant la tête 20.

Au cours de la poussée, les chanfreins 12.1 et 12.2 (en pratique un seul chanfrein circulaire) du poussoir 12 tendent à écarter les lames et à permettre l'enfoncement de l'extrémité du poussoir dans la pince 37. Cependant, au moins au début, le diamètre de l'alésage 38 est insuffisant pour autoriser un tel écartement. Dans ces conditions la pince 37 recule. A une certaine hauteur de l'alésage 38, cet alésage comporte un décrochement 39, de préférence chanfreiné, avec lequel son diamètre augmente. Cette augmentation serait suffisante pour permettre l'écartement des lames de la pince. De préférence toutefois, la raideur des lames, qui leur est conférée par leur forme courbe de coulissement dans l'alésage 38 et ou par la faible longueur de la fente qui les sépare est suffisante pour résister à l'effort d'écartement transmis par les chanfreins 12.1 et 12.2. Dans ces conditions, même après passage du décrochement 39 la pince 37 continue à reculer sous la poussée du poussoir. Au besoin la raideur des lames 20.1 et 20.2 pourrait être assistée par la présence d'un tore élastique 40 accroché à elles et qui les maintient serrées les unes contre les autres.

Cependant, lorsque l'équipage arrive en butée sur le fond du manchon 6, le poussoir ne peut plus que pénétrer dans la pince 37. Si la distance L3 est de l'ordre de L2, l'enfoncement du poussoir dans la pince sera égal à L2-L1, cet enfoncement sera en pratique faible. Sous l'effet de l'écartement de la pince, les lames 20.1 et 20.2 s'évasent dans un alésage 41 résultant du décrochement 39 de l'alésage 38. Au cours de cet enfoncement, l'extrémité 21 de la férule 2 parcourt l'espace 19, à l'intérieur de la cavité 9, et se rapproche de l'extrémité 8. A cet effet, au moment où l'équipage mobile 14 est bloqué, l'extrémité 8 se situe sensiblement au milieu de la hauteur de la cavité 9. Autrement dit, tout l'effort d'insertion a d'abord été effectué sous l'effet du ressort 15, puis sous l'effet des lames 20.1 et 20.2 jusqu'à ce que l'extrémité 21 vienne au contact de l'extrémité 8.

L'extrémité 21 de la férule 2 est fixe par rapport à la face 3 du connecteur 1. Elle ne peut donc reculer. Dans ces conditions, si on continue encore la manoeuvre de connexion, la férule 5 recule dans l'équipage mobile 14 en comprimant la rondelle 18. Dans ta pratique on s'arrange pour que ce dernier déplacement dans lequel la férule 5 est vraiment en réaction mécanique sur la férule 2 soit limité le plus possible, par exemple à 0,5 mm. Compte tenu d'un engagement déjà réalisé en grande partie, des salissures résultant de celle fin de connexion ne sont pas à craindre. On observera par ailleurs qu'au moment du nettoyage des extrémités 8, les cavités 9 ne peuvent se polluer : elles sont protégées par la présence des férules 5.

Au moment de la connexion, le manchon 6 est tenu au connecteur 1 par des moyens, constitués à l'intérieur d'un boîtier non représenté, possédant des verrous escamotables pour maintenir ces deux pièces dans celle position. Ces verrous s'agrippent sur des reliefs 22 et 23 du connecteur et du connecteur complémentaire. Au moment de la déconnexion, on libère ces verrous. La rondelle 18 et le ressort 15, sur une petite course, coopèrent alors ensemble pour repousser le manchon 6. Puis, pour le reste de la course, pour l'essentiel le ressort 15 intervient pour séparer le connecteur complémentaire 4 du connecteur 1. Au moment où la tête 20, écartée par le poussoir 12, arrive à la hauteur du décrochement 39, l'effort de retrait exercé sur le connecteur 1 extrait l'extrémité du poussoir 12 de la pince 37. Après cette extraction, la pince peut se refermer de manière élastique. La tête 20 peut alors à nouveau coulisser dans l'alésage 38 en y étant guidée par le chanfrein du décrochement 39. Vers la fin de la déconnexion, le ressort 15 a pour effet de repousser l'équipage mobile 14 qui porte les férules 5 vers la surface 7 du connecteur complémentaire pour permettre leur nettoyage. Dans ces conditions, du seul fait qu'on déconnecte le connecteur du connecteur complémentaire, les extrémités 8 des férules 5 deviennent apparentes pour être nettoyées.

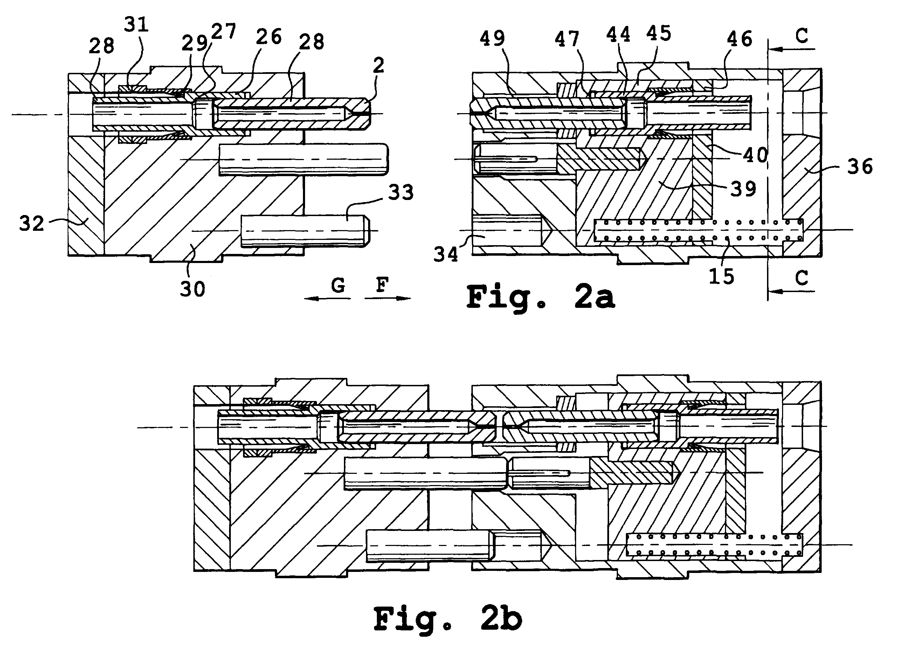

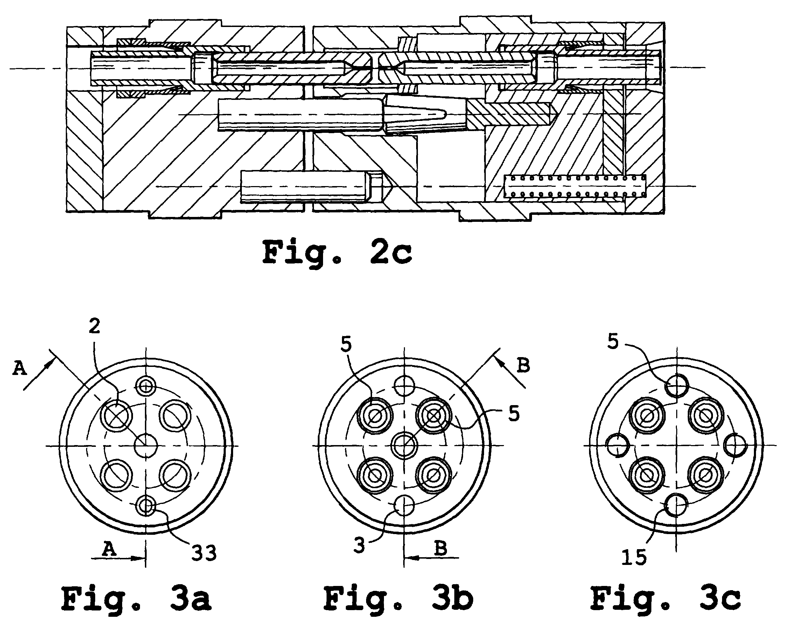

Les figures 2a à 2c montrent en détail une solution préférée de réalisation plutôt que la représentation simple de la figure 1. Elles reprennent, pour les parties correspondantes les mêmes références que celles de la figure 1. De la figure 2a à la figure 2c on constate une progression de l'accouplement du connecteur et du connecteur complémentaire.

La férule 2 est portée par un porte-férule 26. Le porte-férule 26 possède en partie avant une couronne 27. Le sertissage de la férule 2 et du porte-férule 26 sur la fibre optique 10 est effectué en usine. Le montage de la férule 2 et de son porte-férule 26 dans le connecteur 1 est réalisé en insérant celle férule dans un alésage 28 réalisé dans le connecteur 1. L'alésage 28 comporte en tête un verrou élastique, par exemple une couronne 29 à lamelles placée dans l'alésage 28. Au moment où on insère la férule, la couronne 27 repousse les lamelles de la couronne 29. Dès qu'elle a dépassé les extrémités de ces lamelles celles-ci s'échappent et forment un verrou irréversible empêchant le retrait de la férule 2 dans le connecteur 1. Pour que la couronne 29 puisse être insérée et être maintenue en tête du connecteur 1, le connecteur 1 comporte un plateau 30 comportant à l'endroit de la couronne 29, un alésage de diamètre plus grand que l'alésage 28 pour recevoir celle couronne 29. Le plateau 30 est fixé ensuite à un corps 32 du connecteur 1 par tout moyen. Notamment il est vissé. A l'endroit de la couronne 29 à lamelles on a disposé une rondelle 31 en élastomère qui loue un rôle complémentaire à celui de la rondelle 18.

Les figures 3a à 3c sont des vues en coupe du connecteur et du connecteur complémentaire, aux endroits AA BB CC, et avec les directions indiquées. Elles permettent de voir que, dans une solution préférée, on a choisi de monter quatre férules 2, régulièrement réparties sur le tour du connecteur 1. On a également réalisé sur le connecteur 1 deux pions de guidage 33, diamétralement opposés l'un à l'autre, qui permettent au connecteur 1 de se guider dans le connecteur complémentaire 4. Les pions 33 pénètrent dans ce but dans des alvéoles adaptées 34 réalisées dans le manchon 6. De préférence la protubérance du ou des pions 33 est intermédiaire entre L1 et L2. La figure 3c montre qu'il y a quatre ressorts 15, entrelacés sur le pourtour du connecteur complémentaire 4 avec les férules 5, pour provoquer un bon déplacement longitudinal de l'équipage mobile 14 dans le corps 6 du connecteur complémentaire 4. Le ressort 15 est maintenu en butée par un talon 36 fixé au corps 6.

L'équipage mobile 14 est réalisé en deux parties. Il comporte une enclume 39 fixée à un socle 40. La férule 5 comportera, comme la férule 2, un porte-férule 44. Le porte-férule 44 est monté en préparation dans un tube 45 avec la rondelle 18. Dans ce but le tube 45 possède deux points d'appui: une feuillure 46 d'appui de la rondelle 18 et une butée 47 de maintien du porte-férule. La butée 47 sert à la fois de point d'appui pour retenir le porte-férule dans le tube 45 et d'appui du tube 45 dans un alésage ménagé à cet effet dans le corps 6 pour recevoir cet ensemble. La feuillure 46 est de préférence réalisée par la présence du socle 40, ce qui facilite le montage.

Ce montage est effectué de la manière suivante. La férule 5, le porte-férule 44 et la fibre optique 11 sont montés, en usine, avec une deuxième couronne à lamelles 48 et la rondelle 18 à l'intérieur du tube 45. Le tube 45 est ensuite inséré par son extrémité dans l'alésage 9. La butée 47 vient limiter son déplacement d'un côté. La deuxième couronne à lamelles 48, est du même type que la couronne 29. Elle permet de verrouiller la position du porte-férule 44 dans le tube 45. Le socle 40 facilite ce montage. En pratique le connecteur complémentaire 4 peut être assemblé et la férule 5 peut y être introduite après cet assemblage. Le corps 6 comporte par ailleurs un manchon 49 présent dans la cavité 9. Le manchon 49 est fendu et permet l'alignement des férules 2 et 5. Ce manchon est monté flottant dans le corps 6, pour permettre d'assurer une flottabilité des contacts optiques, ce qui facilite un réalignement éventuel des férules 2 et 5.

Outre la réduction significative de la taille de l'ensemble de connecteurs, connecteur et connecteur complémentaire (fiche plus prise), un autre avantage important apparaît du fait de l'utilisation de contacts mâles et femelles identiques en permettant ainsi de simplifier le câblage et le montage de l'ensemble.

## Revendications

1. Système de connecteurs optiques comportant d'une part un connecteur(1) portant un premier jeu de férules (2) et d'autre part un connecteur complémentaire (4) portant en correspondance un deuxième jeu de férules (5) dépassant d'un manchon (6) coulissant capable d'occuper deux positions, une position de déconnexion dans laquelle le manchon est en retrait sur le connecteur complémentaire et laisse apparaître des extrémités des deuxièmes férules, et une position de connexion dans laquelle le manchon est avancé sur le connecteur complémentaire et forme le réceptacle (9) femelle du connecteur, caractérisé en ce que le connecteur comporte un poussoir (12) fixe et en ce que le connecteur complémentaire comporte un équipage mobile (14) qui emporte le deuxième jeu de férules et qui est muni d'une pince (37) de manoeuvre en butée sur le poussoir lors du passage de la position de déconnexion à la position de connexion et qui enveloppe une extrémité de ce poussoir dans la position de connexion.

2. Système de connecteurs selon la revendication 1, caractérisé en ce que le manchon du connecteur complémentaire (4) comporte un alésage (38) pour recevoir le poussoir et la pince, cet alésage possédant un décrochement (39) de son diamètre pour permettre l'ouverture de la pince et l'enveloppement de l'extrémité du poussoir.

3. Système de connecteurs selon l'une des revendications 1 à 2, caractérisé en ce que la pince comporte un tronçon d'un cylindre circulaire formé de lames (20.1, 20.2) courbes dressées.

4. Système de connecteurs selon la revendication 3, caractérisé en ce que les lames dressées sont recourbées vers l'intérieur du cylindre et en ce que l'extrémité du poussoir est tronconique (12.1, 12.2).

5. Système de connecteurs selon l'une des revendications 3 à 4, caractérisé en ce qu'une tête de la pince comporte un tore (40) élastique qui rapproche les lames et en ce que l'extrémité du poussoir est tronconique.

6. Système de connecteurs selon l'une des revendications 1 à 5, caractérisé en ce que les férules sont maintenues dans le connecteur ou dans le connecteur complémentaire femelle par un verrou élastique (29, 48) et une rondelle en élastomère (31, 18).

7. Système de connecteurs selon l'une des revendications 1 à 6, caractérisé en ce que le connecteur comporte un jeu de pions de guidage (33), et en ce que le connecteur complémentaire femelle comporte un jeu d'alvéoles (34) pouvant recevoir chacune un pion du jeu de pions de guidage.

8. Système de connecteurs selon l'une des revendications 1 à 7, caractérisé en ce que la pince est montée dans un alésage de l'équipage mobile.

9. Système de connecteurs selon l'une des revendications 1 à 8, caractérisé en ce que le connecteur et le connecteur complémentaire possèdent des reliefs (22, 23) pour être maintenus en position connectés dans un boîtier.

10. Système de connecteurs selon l'une des revendications 1 à 9, caractérisé en ce que le manchon comporte un manchon fendu (49) de réalignement.

11. Système de connecteurs selon l'une des revendications 1 à 10, caractérisé en ce que les férules du connecteur sont identiques aux férules du connecteur complémentaire.
